# EUROPÄISCHE PATENTSCHRIFT

(11) **EP 0 631 476 B1**
(45) Veröffentlichungstag und Bekanntmachung des Hinweises auf die Patenterteilung: **29.05.1996**
(21) Anmeldenummer: 93905082.9
(22) Anmeldetag: 16.03.1993
(51) Int. Cl.: A21C 1/02

(54) **VORRICHTUNG ZUM RÜHREN UND BZW. ODER KNETEN VON TEIG**
DEVICE FOR MIXING KNEADING DOUGH
DISPOSITIF POUR MELANGER OU PETRIR DE LA PATE

(30) Priorität: 16.03.1992 AT 527/92
(43) Veröffentlichungstag der Anmeldung: 04.01.1995
(73) Patentinhaber: König, Elisabeth, A-8045 Graz (AT)
(72) Erfinder: KÖNIG, Helmut, deceased (DE)
(74) Vertreter: Wildhack, Helmut, Dipl.-Ing. Dr.
(86) Internationale Anmeldenummer: AT9300050
(87) Internationale Veröffentlichungsnummer: WO9318657

(56) Entgegenhaltungen:
- EP-A- 0 439 689
- AT-A- 321 253
- FR-A- 371 299
- FR-A- 430 804
- FR-A- 1 596 953
- GB-A- 502 105
- GB-A- 2 015 362
- US-A- 2 345 266

## Beschreibung

Die Erfindung bezieht sich auf eine Vorrichtung zum Rühren und bzw. oder Kneten von Teig, mit einem Gestell, das eine Aufnahme hat, in welche ein Behälter für den Teig einbringbar und in welcher der Behälter in der eingebrachten Stellung mittels einer Hubvorrichtung entlang von Führungen in eine Lage anhebbar ist, in welcher zumindest ein vom Gestell getragenes Werkzeug für das Rühren und bzw. oder Kneten des Teiges in den in dieser Lage unverdrehbaren Behälter eintaucht, wobei jedes Werkzeug zu einer Dreh- oder Knetbewegung von einem Antrieb angetrieben ist, der vom Gestell getragen ist, und mindestens ein Werkzeug exzentrisch zur Achse des Behälters in einem Werkzeugträger relativ zu diesem beweglich gelagert ist, welcher Werkzeugträger relativ zum Behälter um dessen Achse durch einen Antrieb verdrehbar ist und in der angehobenen Stellung des Behälters einen Abschlußdeckel für die obere Öffnung des Behälters bildet und wobei das Gestell einen Kranz hat, gegen den der Rand der oberen Öffnung des Behälters zur Erreichung dessen angehobener Stellung angehoben wird. Eine solche Vorrichtung ist aus der GB-A 2 015 362 bekannt.

Für das Rühren bzw. Kneten von Teig sind zahlreiche Vorrichtung bekannt. Für Mischmaschinen hat die übliche Bauweise eine Spirale als Werkzeug, welche über den Maschinenkopf angetrieben wird, wobei ein Maschinenständer hochgehoben wird, damit der Mischkübel, der sich vom Maschinengestell trennen läßt, ausgefahren werden kann. Bei anderen Maschinen ist der Mischkopf nicht senkrecht anhebbar, sondern nach hinten aufkippbar. Solche Maschinen haben den Vorteil, daß der bearbeitete Teig mit dem Behälter verfahren und dadurch zeitsparend an eine andere Arbeitsstelle der Bäckerei gebracht werden kann. Nur für die Verarbeitung kleinerer Teigmengen wird der Behälter nicht mehr ausfahrbar gebaut, sondern ist ortsfest mit dem Rahmen verbunden. Wenn die für die Teigbearbeitung nötigen Werkzeuge nicht anhebbar sind, so sind sie bei der Entnahme des fertigen Teiges hinderlich.

Bei einer schweren Industriemaschine ist es bekannt, den zu verarbeitenden Teig in einer Wanne zuzubereiten, wobei Knetwerkzeuge horizontal angeordnet sind. Zum Entleeren des Teiges wird die Wanne um eine horizontale Achse gekippt.

Es ist auch eine Vorrichtung bekannt, bei welcher ein mittels eines Fahrgestelles verfahrbarer Behälter an das Gestell in dessen Aufnahme herangefahren werden kann und mittels einer hydraulischen Vorrichtung in die Arbeitslage gebracht wird, in welcher im Maschinenkopf angeordnete Mischwerkzeuge in den Behälter eintauchen (Prospekt Collette High Speed Mixers).

Diesen bekannten Mischmaschinen mit Ausnahme der erwähnten schweren Industriemaschine ist der Nachteil eigen, daß der Kraftfluß über Mischwerkzeug, Mischmaschinenständer, Verbindung desselben mit dem Behälter und über die Teigmasse wieder zurück zum Werkzeug führt. Es müssen daher alle Verbindungselemente stark ausgeführt werden und es müssen starke Arretierungen zwischen Behälter und Mischmaschinenständer vorhanden sein, damit die hohen Kräfte, die beim Mischen entstehen, aufgenommen werden können. Auch die Behälter selbst müssen so stark gebaut sein, daß auch hier die auftretenden Kräfte von der Behälterwand aufgenommen werden können. Dennoch kommt es in der Praxis immer wieder zu Verformungen, auch wenn fallweise Stützrollen am Ständer vorgesehen werden, an welchen die Behälterwand abgestützt wird, um die erwähnten Verformungen abzufangen.

Der letztere Nachteil ist bei einer Konstruktion der eingangs geschilderten Art dadurch gemildert, daß der Werkzeugträger an einer den Kranz des Gestelles überspannenden Brücke drehbar gelagert ist. Dadurch geht zwar der Kraftfluß nicht über den Behälter, aber die Brücke vergrößert die Bauhöhe der Vorrichtung und es ergeben sich durch die vom Werkzeug übertragenen Reaktionskräfte erhebliche Biegebeanspruchungen auf die Drehlagerung des Werkzeugsträgers. Die Erfindung setzt sich zur Aufgabe, eine Vorrichtung der eingangs geschilderten Art zu schaffen, bei welcher die erwähnten Beanspruchungen weitgehend gemildert sind und welche im Vergleich zur zuletzt erwähnten bekannten Vorrichtung die Bauhöhe reduziert und die Drehlagerung des Werkzeugträgers günstiger gestaltet. Außerdem soll die Erfindung eine effektive und vielseitige Bauweise im Hinblick auf die Bearbeitung des Teiges zulassen. Die Erfindung löst diese Aufgabe - ausgehend von der eingangs geschilderten bekannten Vorrichtung - dadurch, daß der Werkzeugträger mit seinem Umfang am Kranz drehbar gelagert ist. Dadurch werden die vom Werkzeug oder den Werkzeugen übertragenen Reaktionskräfte wesentlich günstiger vom Werkzeugträger auf das Gestell abgeleitet als bei der zuletzt beschriebenen bekannten Vorrichtung und darüberhinaus wird die Bauhöhe durch die Einsparung der Brücke verringert und die Bauweise vereinfacht. Dadurch, daß die Lagerung des Werkzeugträgers von seinem Zentrum auf seinen Umfang verlegt ist, steht ferner am Werkzeugträger mehr Platz für die Unterbringung der Werkzeuge bzw. ihres Antriebes zur Verfügung. Es läßt sich daher die Erfindung auch auf sehr große Vorrichtungen, d.h. für Behälter mit großem Fassungsraum anwenden, wo dementsprechend auch die Reaktionskräfte groß sind. Es läßt sich daher die Erfindung auch für solche Behälter verwenden, welche infolge ihres großen Gewichtes gefahren werden müssen. Vorzugsweise ist hiebei im Rahmen der Erfindung der Behälter mit einem Fahrgestell versehen. Dies ermöglicht es, mehrere Behälter abwechselnd zu verwenden, welche rasch gewechselt werden müssen. Der im Betrieb, d.h. in der angehobenen Stellung, feststehende Behälter benötigt keinen Aufwand für seinen Drehantrieb, was infolge des beträchtlichen Gewichtes eines großen Behälters samt der darin befindlichen Teigmasse insbesondere bei großen Maschinen einen wesentlichen Vorteil bildet. Die Arretierung des Behälters in der Betriebsstellung ist unproblematisch und kann ohne großen Kraftaufwand in jeder Drehstellung des rotationssymmetrischen Behälters erfolgen, da ja der Behälter nicht im Kraftfluß liegt. Ferner ist die erfindungsgemäße Vorrichtung variabel hinsichtlich der zur Anwendung kommenden Werkzeuge und der bereits erwähnte, reichlich am Werkzeugträger zur Verfügung stehende Platz ermöglicht eine stabile Lagerung aller zur Verwendung kommenden Werkzeuge.

Es wird auch der der zuletzt beschriebenen bekannten Bauweise eigene Vorteil gewahrt, daß der Werkzeugträger in der angehobenen Stellung des Behälters einen Abschlußdeckel für die obere Behälteröffnung bildet, sodaß ein unbeabsichtigter Austritt vom Teig oder Teigbestandteilen in einfacher Weise vermieden wird.

Gemäß einer bevorzugten Ausführungsform der Erfindung ragt der Werkzeugträger topfartig in den Kranz von oben hinein und ist mit einer zylindrischen Wand mittels eines Lagers an einer gleichfalls zylindrischen Wand des Kranzes drehbar gelagert. Dies ergibt die günstigste Bauweise für die Ableitung der Reaktionskräfte in das Gestell.

Gemäß einer Weiterbildung der Erfindung sind für die Drehbewegung des Werkzeugträgers und für die Bewegung der Werkzeuge relativ zu diesem gesonderte Antriebe vorgesehen. Dies ist günstiger als die im Prinzip ebenfalls mögliche Bauweise, die Bewegung des Werkzeugträgers und die Bewegung der Werkzeuge vom gleichen Antriebsmotor abzuleiten, etwa mittels eines vom Werkzeugträger getragenen Planetengetriebes. Die Verwendung gesonderter Antriebe ermöglicht es jedoch, die Bewegung der Werkzeuge völlig unabhängig von der Drehbewegung des Werkzeugträgers zu wählen und gegebenenfalls während des Bearbeitungsvorganges zu ändern, ohne daß dies einen Einfluß auf die Drehbewegung des Werkzeugträgers hat. Besonders günstig ist es im Rahmen der Erfindung, wenn der Werkzeugträger ein Getriebe für die Bewegung der Werkzeuge trägt, das eine in der Achse des Behälters liegende Antriebswelle hat, die von einem vom Gestell getragenen Motor, vorzugsweise mittels eines Keilriemens, angetrieben ist. Dies ergibt eine besonders einfache und günstige Konstruktion, wobei es das Getriebe ermöglicht, die Drehzahl der Werkzeuge an die jeweils gewünschten Erfordernisse anzupassen.

Wie erwähnt, ist die Erfindung vielseitig hinsichtlich der Art der zur Verwendung kommenden Werkzeuge, welche nicht unbedingt eine Drehbewegung um ihre eigene Achse vollführen müssen, sondern auch Knetwerkzeuge mit einer pendelartigen Bewegung sein können. Für die erstere Variante ist erfindungsgemäß der Werkzeugträger zumindest mit einer Öffnung in seinem Boden versehen, die exzentrisch zur Achse des Behälters angeordnet ist und von der zur Achse des Behälters verlaufenden Welle eines Werkzeuges durchsetzt ist, vorzugsweise unter Vermittlung eines Lagers, wobei diese Welle eine Antriebswelle des Getriebes ist. Für Knetwerkzeuge ist es im Rahmen der Erfindung möglich, den Werkzeugträger zumindest mit einem Schlitz in seinem Boden zu versehen, der von einem Werkzeug durchsetzt ist, das an seinem oberen Ende an einer Kurbel an der Abtriebswelle des Getriebes und darunter an einer mit dem Werkzeugträger gelenkig verbundenen Koppel angelenkt ist. Zweckmäßig sind erfindungsgemäß die verbleibenden Restteile jedes Schlitzes durch einen Faltenbalg abgedeckt, um den unerwünschten Austritt von zu verarbeitendem Material aus dem Behälter zu vermeiden. Bei einer solchen Bauweise ist es zweckmäßig, zumindest zwei Werkzeuge vorzusehen, die zu jedem Zeitpunkt unterschiedliche Betriebsstellungen haben, um einen optimalen Bearbeitungseffekt auf den Teig auszuüben. Besonders günstig ist es hiebei im Rahmen der Erfindung, jeweils zwei Werkzeuge an zwei Kurbeln anzulenken, die gegenläufig angetrieben sind.

Die erfindungsgemäße Vorrichtung ist verhältnismäßig unempfindlich in Bezug auf die Relativlage der Werkzeuge zum Behälter. Dennoch ist es aus praktischen Gründen und zur Vermeidung unerwünschter Behälterspannungen zweckmäßig, den Behälter in der an sich bekannten Hubvorrichtung in besonderer Weise zu verankern. Hiezu sieht die Erfindung gemäß einer Weiterbildung vor, daß die Hubvorrichtung eine Gabel hat, zwischen deren Arme der Behälter einfahrbar ist und an der eine Klemmvorrichtung für den oberen Rand des Behälters vorgesehen ist. Gemäß einer Weiterbildung der Erfindung hat diese Klemmvorrichtung zumindest zwei den Rand des Behälters übergreifende Bügel, die in der angehobenen Stellung des Behälters durch Federn gegen den Rand des Behälters gedrückt sind, in der Einfahrstellung jedoch mittels Fortsätzen an Anschlägen anliegen und in dieser Stellung entgegen der Wirkung der Federn angehoben sind und den Rand des Behälters freigeben. Eine automatische Zentrierung kann hiebei dadurch erreicht werden, daß die Bügel und bzw. oder der Rand des Behälters mit Schrägflächen zur Zentrierung des Behälters versehen sind.

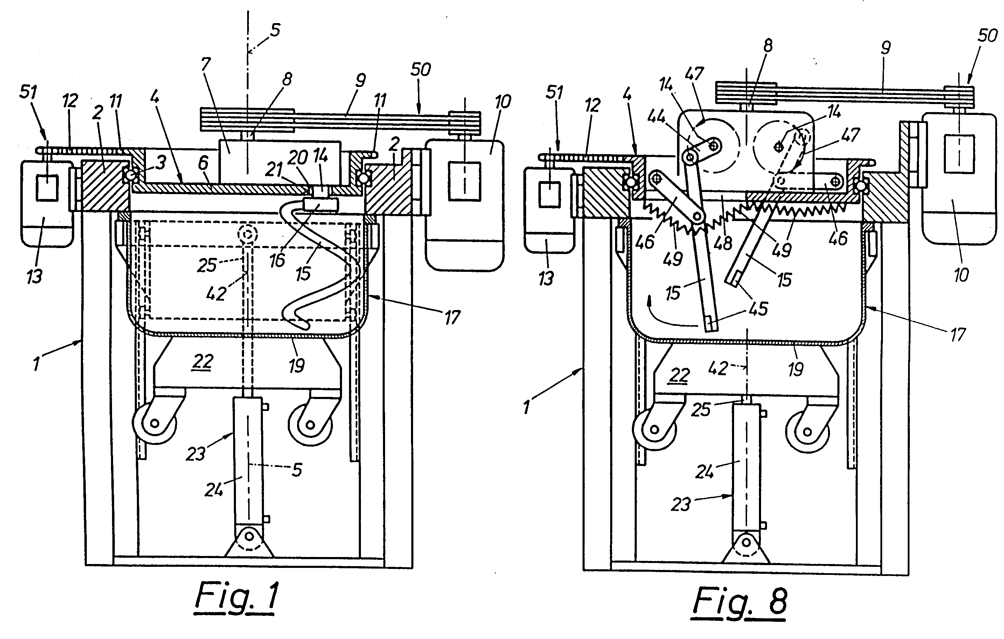

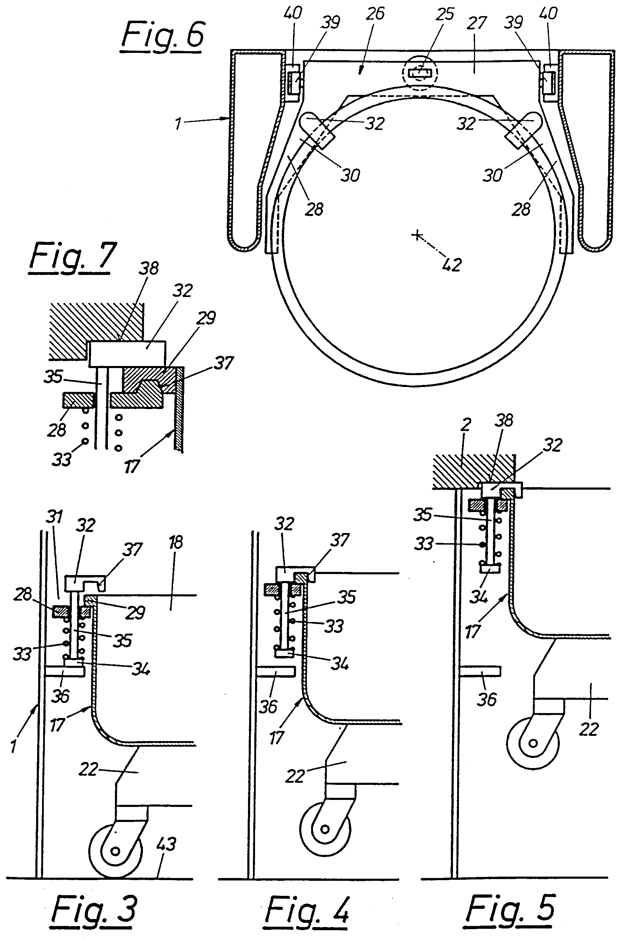

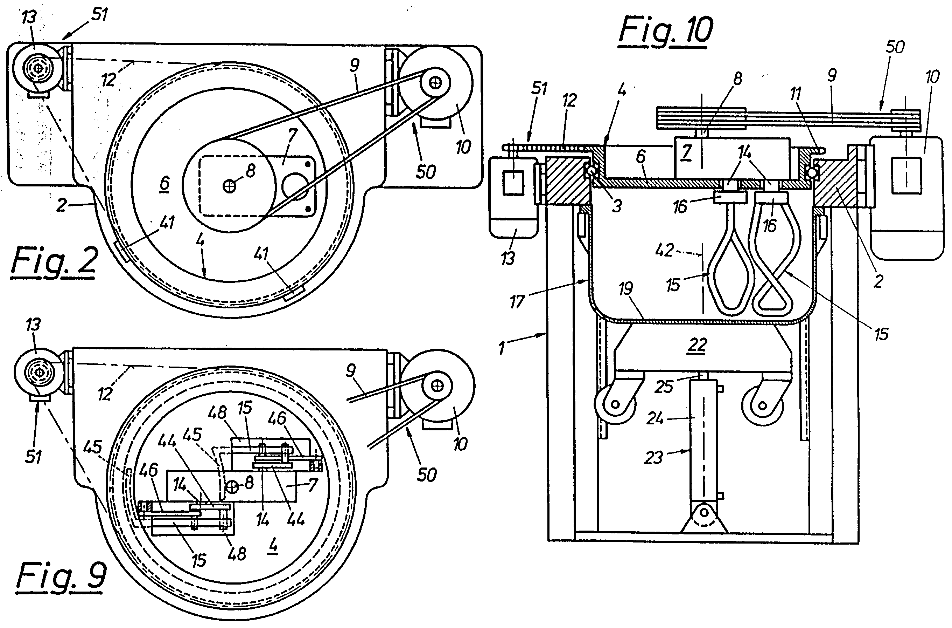

In der Zeichnung sind Ausführungsbeispiele des Erfindungsgegenstandes schematisch dargestellt. Fig.1 zeigt eine als Mischmaschine ausgebildete Vorrichtung im Vertikalschnitt. Fig.2 zeigt eine Draufsicht zu Fig.1. Die Fig.3,4 und 5 zeigen den Behälter der Vorrichtung in drei verschiedenen Phasen des Anhebvorganges. Fig.6 ist ein Horizontalschnitt durch den Ständer der Maschine. Fig.7 zeigt im Detail eine Variante der Klemmvorrichtung für den Rand des Behälters. Fig.8 zeigt eine Ausführungsvariante mit zwei Knetarmen im Schnitt ähnlich Fig.1. Fig.9 ist eine Draufsicht zu Fig.8. Fig.10 zeigt eine Ausführungsvariante mit zwei Doppelwendelknetarmen im Schnitt ähnlich Fig.1.

Die Vorrichtung nach den Fig.1 bis 6 hat ein Gestell 1, auf das oben ein Kranz 2 aufgesetzt ist, in welchem mittels eines Kugellagers 3 ein als Drehkörper ausgebildeter Werkzeugträger 4 um eine vertikale Achse 5 drehbar gelagert ist. Der Werkzeugträger 4 ist topfartig ausgebildet und hat eine zylindrische Außenwand, zwischen der und einer zylindrischen Innenwand des Kranzes 2 das Lager 3 liegt. Auf seinem Boden 6 trägt der Werkzeugträger 4 ein Getriebe 7, welches als Regelgetriebe ausgebildet sein kann und eine Antriebswelle 8 hat, die zentrisch in der Achse 5 angeordnet ist und mittels eines Keilriementriebes 9 von einem Motor 10 angetrieben wird, der seitlich am Kranz 2 angeflanscht ist. Der Antrieb des Werkzeugträgers 4 zur Rotation um die Achse 5 erfolgt mittels eines am oberen Rand der zylindrischen Außenwand des Werkzeugträgers 4 vorgesehenen Zahnkranzes 11, über welchen eine Kette 12 läuft, die von einem auf der Abtriebswelle eines weiteren Motors 13 sitzenden Kettenrand angetrieben wird. Der Motor 13 ist ebenfalls seitlich am Kranz 2 angeflanscht, und zwar auf der dem Motor 10 gegenüberliegenden Seite der Vorrichtung.

Das Getriebe 7 hat eine nach unten ragende Abtriebswelle 14, an welcher ein Werkzeug 15 befestigt ist, das bei dieser Ausführungsform als wendelförmig gestaltetes Misch- bzw. Knetwerkzeug ausgebildet ist, das mit der Welle 14 über einen Arm 16 verbunden ist. Das Werkzeug 15 ragt in der Arbeitsstellung eines Behälters 17 von oben durch dessen Öffnung 18 in das Behälterinnere hinein und reicht bis fast zum Boden 19 des Behälters 17. Zur sicheren Führung der Abtriebswelle 14 und damit des Werkzeuges 15 kann diese Welle im Boden 6 mittels eines Lagers 20 gelagert sein, welches in eine Öffnung 21 des Bodens 6 eingesetzt ist, die von der Welle 14 durchsetzt wird.

Der Behälter 17 ist an seinem Boden 19 mit einem Fahrgestell 22 verbunden und mittels einer hydraulischen Hubvorrichtung 23 in die in Fig.1 dargestellte Arbeitsstellung anhebbar. Die Hubvorrichtung 23 hat einen hydraulischen Zylinder 24, dessen Kolbenstange 25 mit einer Aufnahme 26 (Fig.6) für den Behälter 17 verbunden ist. Die Aufnahme 26 ist - in der Draufsicht gesehen (Fig.6) - U-förmig ausgebildet und hat zwei durch ein an der Kolbenstange 25 befestigtes Querstück 27 verbundene Arme 28, welche beim Einfahren des Behälters 17 in die Aufnahme 26 (Fig.3) den nach außen gekröpften Rand 29 des Behälters 17 untergreifen. Zweckmäßig sind die Abmessungen so gewählt, daß die Arme 28, welche ja die Tragarme für den Behälter 17 bilden, seinen Rand 29 nicht nur im Bereich zweier einander diametral gegenüberliegender Stellen untergreifen, sondern auch in zwei dazwischenliegenden Bereichen 30 (Fig.6), um die Beanspruchungen auf den Behälter 17 gleichmäßiger zu verteilen. Um beim Hubvorgang den Behälter 17 an der Hubvorrichtung 23 festzulegen, dient eine Klemmvorrichtung 31 (Fig.3 bis 5), welche mehrere über den Umfang des Behälters 17 im Bereich der Aufnahme 26 verteilte Bügel 32 hat, die beim Einschieben des Behälters 17 in die Aufnahme 26 (Fig.3) über den Rand 29 des Behälters 17 zu liegen kommen. Jeder Bügel 32 hat einen nach unten ragenden Fortsatz 35, welcher als Führung für eine Druckfeder 33 dient, die zwischen den Arm 28 und einen Flansch 34 des Fortsatzes 35 eingespannt ist und dadurch den Bügel 32 gegen den Arm 28 zu drücken trachtet. In der Einschubstellung des Behälters 17 (Fig.3) liegt jedoch der Flansch 34 an einem Anschlag 36 des Gestelles 1 an, so daß der Bügel 32 entgegen der Wirkung der Feder 33 so weit angehoben wird, daß der Rand 29 des Behälters 17 problemlos unter die Bügel 32 geschoben werden kann. Sobald die Hubvorrichtung 23 betätigt wird, wird der Behälter 17 angehoben (Fig.4), wodurch sich die Federn 33 allmählich entspannen und die Bügel 32 auf den Rand 29 zur Auflage kommen. Zur besseren Zentrierung sind die Bügel 32 hakenförmig ausgebildet und mit Schrägflächen 37 versehen. Auf diese Weise wird der Rand 29 des Behälters 17 in einer genau vorbestimmten Lage an den Armen 28 befestigt. Die Hochhebung des Behälters 17 mittels der Hubvorrichtung 23 erfolgt, bis die Bügel 32 mit ihren Deckflächen an einem Anschlag 38 (Fig.5) des Kranzes 2 zur Anlage kommen. Beim Hubvorgang ist die Aufnahme 26 mittels Rollen 39 (Fig.6) in einer Trapezführung 40 geführt.

Bei der Ausführungsvariante nach Fig.7 sind die Schrägflächen 37 nicht an den Bügeln 32 angeordnet, sondern am Rand 29 des Behälters 17 und an den Armen 28.

Zusätzlich hiezu können Indexierpunkte 41 vorgesehen sein (Fig.2), welche dafür sorgen, daß die Achse 42 des Behälters 17 (Fig.1) mit der Achse 5 zusammenfällt. Außerdem sorgen diese Indexierpunkte 41 für eine zusätzliche Abstützung des Behälters 17 und nehmen die seitlichen Schlagkräfte des Werkzeuges 15 auf. Die Verdrehsicherung des Behälters 17 ist jedoch allein durch die Festklemmung des Randes 29 des Behälters 17 an den Armen 28 mittels der Bügel 32 gegeben.

Wie aus den Fig.3 bis 5 ersichtlich ist, erfolgt beim Absenken in umgekehrter Reihenfolge die Freigabe des Behälters 17 bis zum Herausfahren aus der Aufnahme 26, sobald das Fahrgestell 22 des Behälters 17 den Boden 43 erreicht hat und die Bügel 32 sich vom Behälterrand 29 gelöst haben (Fig.3).

Die Schrägflächen 37 sind zweckmäßig paarweise angeordnet, so daß sich eine konische Nut, etwa mit Trapezquerschnitt, in jenem Bauteil ergibt, der die Schrägflächen aufweist, sowie ein Vorsprung mit entsprechendem trapezförmigem Querschnitt an jenem Bauteil, welcher in diese Nut eingreift.

Die Fig.8 und 9 zeigen eine Ausführungsform, welche als Doppelhubkneter ausgeführt ist. Bei dieser Ausführungsform hat das Getriebe 7 zwei horizontale Abtriebswellen 14, die nach verschiedenen Seiten aus dem Kasten des Getriebes 7 herausragen. An jeder dieser Abtriebswellen 14 ist eine Kurbel 44 befestigt, an der das eine Ende des Werkzeuges 15 in Form eines Mischarmes angelenkt ist, der unten eine Schaufel 45 trägt. Zwischen den Schaufeln 45 und den Anlenkstellen an die Kurbeln 44 sind an den Mischarmen 15 Koppeln 46 angelenkt, die mit ihren anderen Enden am Werkzeugträger 4 gelenkig befestigt sind. Die beiden Kurbeln 44 laufen, wie die Pfeile 47 zeigen, in einander entgegengesetzten Richtungen um und sind auf die Abtriebswellen 14 nach einander entgegengesetzten Richtungen aufgesetzt, so daß die beiden Werkzeuge 15 zu jedem Zeitpunkt unterschiedliche Betriebsstellungen haben. Jedes Werkzeug 15 durchsetzt einen Schlitz 48 im Boden 6 des Werkzeugträgers 4, welcher Schlitz 48 gerade so lang ist, daß die erwähnte Pendelbewegung des Werkzeuges 15 und der mit ihm verbundenen Koppel 46 ermöglicht wird. Die die Werkzeuge 15 bildenden Mischarme sind mittels Faltenbälgen gegenüber dem Werkzeugträger 4 abgedichtet, so daß ein unbeabsichtigter Austritt von Teig oder Teigbestandteilen durch die Schlitze 48 vermieden wird.

Diese Ausbildung hat den Vorteil, daß die Mischzeit gegenüber einer Vorrichtung, welche lediglich einen einzigen Knetarm aufweist, um die Hälfte reduziert wird. Jeder das Werkzeug 15 bildende Knetarm schlägt immer vom Zentrum des Behälters 17 zum Rand des Behälters hin, was eine sehr teigschonende Knetung mit geringer Erwärmung des Teiges bedeutet. Da das Werkzeug 15 im Laufe seines Bewegungszyklus auch angehoben wird, werden nicht nur die im Behälter 17 im Bereiche des Bodens 19 desselben liegenden Teigpartien erfaßt, sondern auch die im Behälter 17 höher gelegenen Teiganteile. Außerdem bewirken die gegeneinander versetzten Bewegungsabläufe der beiden Werkzeuge 15, daß jeweils das eine Werkzeug 15 den Teig auf dem anderen Werkzeug 15 nach unten drückt, so daß eine Vergleichmäßigung der Kneteinwirkung auf den im Behälter 17 befindlichen Teig gegeben ist.

Die Ausführungsform nach Fig.10 ähnelt jener nach den Fig.1 bis 6, jedoch sind zwei Werkzeuge 15 vorgesehen, die an Armen 16 befestigt sind, welche auf zwei Abtriebswellen 14 des Getriebes 7 sitzen. Die beiden Abtriebswellen 14 sind beide exzentrisch zur Achse 42 des Behälters angeordnet und - gesehen in ihrer Drehrichtung - gegeneinander um etwa 90° versetzt. Jedes Werkzeug 15 hat die Form einer Doppelwendel, wodurch eine besonders intensive Durchmischung des Teiges gewährleistet wird.

Wenn die Doppelwendeln nach Fig.10 lösbar an den Armen 16 befestigt sind, läßt sich die Vorrichtung leicht auf eine Vorrichtung nach den Fig.1 bis 6 umrüsten, die nicht benötigte Abtriebswelle 15 bzw. der auf ihr befestigte Arm 16 laufen dann leer. Auch eine Umrüstung auf eine Ausbildung nach den Fig.8 und 9 wäre denkbar, wenn im Boden 6 des Werkzeugträgers 4 der Ausführungsform nach Fig.10 die entsprechenden Schlitze vorgesehen sind und das Getriebe 7 entsprechend umgerüstet wird oder auch seitliche Abtriebswellenstummel hat, die bei Bedarf mit den durch die Schlitze 48 hindurchgreifenden Werkzeugen verbunden werden.

Der Antrieb 50 für das Werkzeug 15 oder die Werkzeuge und der Antrieb 51 für die Drehung des Werkzeugträgers 4 könnten gegebenenfalls zu einem einzigen Antrieb zusammengefaßt sein. Bei einer solchen Konstruktion müßten die Wellen 14 der Werkzeuge 15 auf im Werkzeugträger 4 drehbar gelagerten Planetenrädern befestigt sein, die um ein mittiges, vom Gestell 1 unverdrehbar gehaltenes Sonnenrad umlaufen. Eine solche Konstruktion wäre allerdings auf ein fixes Verhältnis der Umlaufzahlen vom Werkzeugträger 4 einerseits und von Werkzeugen 15 anderseits beschränkt.

Durch die erwähnte Umlaufbewegung des Werkzeugträgers 4 und die exzentrische Anordnung zumindest eines Werkzeuges 15 am Werkzeugträger 4 werden alle im Behälter 17 befindlichen Teigpartien erfaßt, so daß eine intensive und gleichmäßige Bearbeitung des Teiges gegeben ist. Falls gewünscht, kann jedoch auch ein in der Achse 42 des Behälters 17 angeordnetes zusätzliches Werkzeug Verwendung finden.

Gegebenenfalls können auch mehr als zwei Werkzeuge 15 auf den Teig im Behälter 17 einwirken. Die Werkzeuge müssen nicht alle gleich sein.

## Patentansprüche

1. Vorrichtung zum Rühren und bzw. oder Kneten von Teig, mit einem Gestell (1), das eine Aufnahme (26) hat, in welche ein Behälter (17) für den Teig einbringbar und in welcher der Behälter (17) in der eingebrachten Stellung mittels einer Hubvorrichtung (23) entlang von Führungen (40) in eine Lage anhebbar ist, in welcher zumindest ein vom Gestell (1) getragenes Werkzeug (15) für das Rühren und oder Kneten des Teiges in den in dieser Lage unverdrehbaren Behälter (17)eintaucht, wobei jedes Werkzeug (15) zu einer Dreh- oder Knetbewegung von einem Antrieb (50) angetrieben ist, der vom Gestell (1) getragen ist, und mindestens ein Werkzeug (15) exzentrisch zur Achse (42) des Behälters (17) in einem Werkzeugträger (4) relativ zu diesem beweglich gelagert ist, welcher Werkzeugträger (4) relativ zum Behälter (17) um dessen Achse (42) durch einen Antrieb (51) verdrehbar ist und in der angehobenen Stellung des Behälters (17) einen Abschlußdeckel für die obere Öffnung (18) des Behälters (17) bildet, und wobei das Gestell (1) einen Kranz (2) hat, gegen den der Rand (29) der oberen Öffnung (18) des Behälters (17) zur Erreichung dessen angehobener Stellung angehoben wird, dadurch gekennzeichnet, daß der Werkzeugträger (4) mit seinem Umfang am Kranz (2) drehbar gelagert ist.

2. Vorrichtung nach Anspruch 1, dadurch gekennzeichnet, daß der Werkzeugträger (4) topfartig in den Kranz (2) von oben hineinragt und mit einer zylindrischen Wand mittels eines Lagers (3) an einer gleichfalls zylindrischen Wand des Kranzes (2) drehbar gelagert ist.

3. Vorrichtung nach Anspruch 1 oder 2, dadurch gekennzeichnet, daß für die Drehbewegung des Werkzeugträgers (4) und für die Bewegung der Werkzeuge (15) relativ zu dem Werkzeugträger (4) gesonderte Antriebe (51 bzw. 50) vorgesehen sind.

4. Vorrichtung nach Anspruch 3, dadurch gekennzeichnet, daß der Werkzeugträger (4) ein Getriebe (7) für die Bewegung der Werkzeuge (15) trägt` das eine in der Achse (42) des Behälters (17) liegende Antriebswelle (8) hat, die von einem vom Gestell (1) getragenen Motor (10), vorzugsweise mittels eines Keilriemens (9), angetrieben ist.

5. Vorrichtung nach Anspruch 4, dadurch gekennzeichnet, daß der Werkzeugträger (4) zumindest eine Öffnung (21) in seinem Boden (6) hat, die exzentrisch zur Achse (42) des Behälters (17) angeordnet ist und von der parallel zur Achse (42) des Behälters (17) verlaufenden Welle (14) eines Werkzeuges (15) durchsetzt ist, vorzugsweise unter Vermittlung eines Lagers (20), wobei diese Welle (14) eine Abtriebswelle des Getriebes (7) ist.

6. Vorrichtung nach Anspruch 4, dadurch gekennzeichnet, daß der Werkzeugträger (4) zumindest einen Schlitz (48) an seinem Boden (6) hat, der von einem Werkzeug (159 durchsetzt ist, das an seinem oberen Ende an einer Kurbel (44) an der Abtriebswelle (149 des Getriebes (7) und darunter an einer mit dem Werkzeugträger (4) gelenkig verbundenenkoppel (46) angelenkt ist.

7. Vorrichtung nach Anspruch 6, dadurch gekennzeichnet, daß der verbleibende Restteil jedes Schlitzes (48) durch einen Faltenbalg (49) abgedeckt ist.

8. Vorrichtung nach Anspruch 6 oder 7, dadurch gekennzeichnet, daß zumindest zwei Werkzeuge (15) vorgesehen sind, die zu jedem Zeitpunkt unterschiedliche Betriebsstellungen haben.

9. Vorrichtung nach Anspruch 8, dadurch gekennzeichnet, daß jeweils zwei Werkzeuge (15) an zwei Kurbeln (44) angelenkt sind, die gegenläufig angetrieben sind.

10. Vorrichtung nach einem der Ansprüche 1 bis 9, dadurch gekennzeichnet, daß die Hubvorrichtung (23) eine Gabel bzw. einen U-förmigen Badteil hat, zwischen deren bzw. dessen Arme (28) der Behälter (17) einfahrbar ist und an der bzw. dem eine Klemmvorrichtung (31) für den oberen Rand (29) des Behälters (17) vorgesehen ist.

11. Vorrichtung nach Anspruch 10, dadurch gekennzeichnet, daß die Klemmvorrichtung (31) zumindest zwei den Rand (29) des Behälters (17) übergreifende Bügel (32) hat, die in der angehobenen Stellung des Behälters (17) durch Federn (33) gegen den Rand (29) des Behälters (17) gedrückt sind, in der Einfahrstellung jedoch mittels Fortsätzen (35) an Anschlägen (36) des Kranzes (2) anliegen und in dieser Stellung entgegen der Wirkung der Federn (33) angehoben sind und den Rand (29) des Behälters (17) freigeben.

12. Vorrichtung nach Anspruch 10 oder 11, dadurch gekennzeichnet, daß die Bügel (32) und bzw. oder der Rand (29) des Behälters (17) mit Schrägflächen (37) zur Zentrierung des Behälters (17) versehen sind.

13. Vorrichtung nach einem der Ansprüche 1 bis 12, dadurch gekennzeichnet, daß der Behälter (17) mit einem Fahrgestell (22) versehen ist.

## Claims

1. Apparatus for stirring and/or kneading dough, comprising a support (1) having receiving means (2) into which a container (17) for dough is insertable, and wherein the container (17), when inserted, is liftable along guides (40) by lifting means (23) into a position in which at least one tool (15) carried by the support (1) for stirring and/or kneading dough immerges into the container (17) which is unrotatable in this position, each tool (15) being driven by driving means (50) carried by the support (1) to exert a rotating or kneading movement, and at least one tool (15) being movably mounted in a tool support (4) in an eccentric manner relative to the axis (42) of the container (17), said tool support (4) being rotatable by drive means (51) relative to the container (17) about the axis (42) thereof and in the lifted position of the container (17) forming a covering lid for the upper opening (18) of the container (17), said support (1) having a rim (2) towards which the periphery portion (29) of the upper opening (18) of the container (17) is lifted to reach its lifted position, characterized in that the circumference of the tool support (4) is rotatably mounted on said rim (2).

2. Apparatus as claimed in claim 1, characterized in that the tool support (4) extends in a pot-like manner from above down into the rim (2), a cylindrical wall thereof being rotatably mounted by journal means (3) on a wall of the rim (2) being also cylindrical.

3. Apparatus as claimed in claim 1 or 2, characterized in that individual drive means (51 and 50) are provided for the rotational movement of the tool support (4) as well as for the movement of the tools (15) relative to the tool support (4).

4. Apparatus as claimed in claim 3, characterized in that the tool support (4) carries gear means (7) for the movement of the tools (15) which includes a drive shaft (8) extending along the axis (42) of the container (17), said drive shaft being driven, preferably by means of a V-belt, by a motor (10) supported by the support (1).

5. Apparatus as claimed in claim 4, characterized in that the tool support (4) has at least one opening (21) in its bottom (6) which is situated eccentrically to the axis (42) of the container (17), and which is penetrated by one tool's (15) shaft (14) extending parallely to the axis (42) of the container (17), preferably arranging journal means thereon, said shaft (14) being an output shaft of the gear means (7).

6. Apparatus as claimed in claim 4, characterized in that the tool support (4) has at least one slot (48) at its bottom (6) which is penetrated by a tool (159), the upper end of which is pivoted to a crank (44) at the output shaft (149) of the gear means (7), whereas below it is pivoted to a coupler (46) pivotally connected to the tool support (4).

7. Apparatus as claimed in claim 6, characterized in that the remaining residual portion of each slot is covered by bellows.

8. Apparatus as claimed in claim 6 or 7, characterized in that at least two tools (15) are provided which have different operating positions at all times.

9. Apparatus as claimed in claim 8, characterized in that two tools (15) are respectively pivoted to two cranks (44) driven in opposite directions.

10. Apparatus as claimed in any of claims 1 to 9, characterized in that the lifting means (23) comprises a fork or an U-shaped structure, the container (17) being insertable into its legs (28), clamping means (31) for the upper periphery portion (29) of the container (17) being provided thereon.

11. Apparatus as claimed in claim 10, characterized in that the clamping means (31) comprises at least two brackets (32) engaging over the periphery portion (29) of the container (17) which, in lifted position of the container (17), are pressed against the periphery portion (29) of the container (17) by springs (33), but with extensions (35) engaging detent means (36) of the rim (2), in this position being lifted against the action of the springs (33), thus releasing the periphery portion (29) of the container (17).

12. Apparatus as claimed in claim 10 or 11, characterized in that the brackets (32) and/or the periphery portion (29) of the container (17) are provided with inclined surfaces (37) for centring the container (17)

13. Apparatus as claimed in any of claims 1 to 12, characterized in that the container (17) is provided with an undercarriage (22).

## Revendications

1. Dispositif pour le remuage et/ou le pétrissage de la pâte, comprenant un bâti (1) ayant un dispositif de réception (26) dans laquelle un récipient (17) pour la pâte peut être introduit et dans laquelle le récipient (17) dans la position introduite est soulevable à l'aide d'un dispositif de levage (23) le long d'un moyen de guidage (40) jusqu'à une position, dans laquelle au moins un outil (15) porté par le bâti (1) pour le remuage et/ou le pétrissage de la pâte plonge dans le récipient (17) immobilisé dans cette position, chaque outil (15) étant entraîné dans un mouvement de remuage et/ou de pétrissage par un moyen d'entraînement (50) supporté par le bâti (1) et au moins un outil (15) étant logé excentriquement par rapport à l'axe (42) du récipient (17) dans un porte-outils (4) d'une manière mobile par rapport à celui-ci, ledit porte-outils (4) étant rotatif par rapport au récipient (17) autour de l'axe (42) duquel à l'aide d'un moyen d'entraînement (51) et formant, dans la position soulevée du récipient (17), un couvercle pour l'ouverture supérieure (18) du récipient (17), ledit bâti (1) ayant un couronne (2) contre lequel le bord (29) de l'ouverture supérieure (18) du récipient (17) est levé pour atteindre son position soulevée, caractérisé en ce que le porte-outils (4) est logé de manière rotatoire avec son périmètre sur la couronne (2).

2. Dispositif selon la revendication 1, caractérisé en ce que le porte-outils (4) s'emboîte comme un pot par le haut dans la couronne (2) et en ce qu'une paroi cylindrique de celui-ci est logée de manière rotatoire au moyen d'un palier (3) dans une paroi de la couronne (2) elle-même cylindrique.

3. Dispositif selon la revendication 1 ou 2, caractérisé en ce que pour le mouvement rotatif du porte-outils (4) ainsi que le mouvement des outils (15) par rapport au porte-outils (4) des moyen d'entraînements séparés (51 respectivement 50).

4. Dispositif selon la revendication 3, caractérisé en ce que le porte-outils (1) porte un engrenage (7) pour le mouvement des outils (15) muni d'un arbre d'entraînement (8) situé dans l'axe (42) du récipient (17), entraîné par un moteur (10) supporté par le bâti (1), de préférence au moyen d'une courroie trapézoïdale (9).

5. Dispositif selon la revendication 4, caractérisé en ce que le porte-outils (4) possède au moins une ouverture (21) dans son fond (6), laquelle est disposée excentriquement par rapport à l'axe (42) du récipient (17) et est pénétrée par l'arbre (14) d'un outil (15) située parallèlement à l'axe du récipient (17), de préférence par l'entremise d'un palier (20), cet arbre (14) étant un arbre de sortie de l'engrenage (7).

6. Dispositif selon la revendication 4, caractérisé en ce que le porte-outils (4) possède au moins une fente (48) en son fond (6), pénétrée par un outil (15) qui dans sa partie supérieure est articulée à une manivelle (44) sur l'arbre de sortie (14) de l'engrenage (7) et en dessous à une bielle (46) articulée au porte-outils (4).

7. Dispositif selon la revendication 6, caractérisé en ce que l'espace libre de chaque fente (48) est recouvert par un soufflet (49).

8. Dispositif selon la revendication 6 ou 7, caractérisé en ce qu'au moins deux outils (15) sont prévus, lesquels ont en tout temps une position de fonctionnement différente.

9. Dispositif selon la revendication 8, caractérisé en ce qu'au moins deux outils (15) sont articulés a deux manivelles (44) entraînées en sens inverse.

10. Dispositif selon l'une des revendications 1 à 9, caractérisé en ce que le dispositif de levage (23) possède une fourche respectivement une pièce en forme d'un U, entre les bras (28) desquelles le récipient (17) est insertable, et sur laquelle un dispositif de serrage (31) pour le bord supérieur (29) du récipient (17) est prévu.

11. Dispositif selon la revendication 10, caractérisé en ce que le dispositif de serrage (31) est muni d'au moins deux étriers (32) chevauchant le bord du récipient (17), qui, dans la position soulevée du récipient (17), sont pressés vers le bord (29) du récipient (17) par des ressorts (33), et qui, dans la position d'introduction s'engagent a l'aide des prolongements (35) aux butées (36) de la couronne (2), et qui sont soulevés dans cette position contre l'effet des ressorts (33) ainsi libérant le bord (29) du récipient (17).

12. Dispositif selon la revendication 10 ou 11, caractérisé en ce que les étriers (32) et respectivement ou le bord (29) du récipient (17) sont munis des surfaces obliques (37) pour le centrage du récipient (17).

13. Dispositif selon l'une des revendications 1 à 12, caractérisé en ce que le récipient (17) est muni d'un chariot (22).
